(19) **Europäisches Patentamt**

**European Patent Office**

**Office européen des brevets**

(11) **EP 0 517 956 B1**

(12) **EUROPEAN PATENT SPECIFICATION**

(45) Date of publication and mention
of the grant of the patent:
**17.10.2001 Bulletin 2001/42**

(51) Int Cl.⁷: **G06K 7/10**, G02B 26/10

(21) Application number: **91122396.4**

(22) Date of filing: **30.12.1991**

(54) **Device with extended depth of focus for electro-optically reading indicia**

Gerät mit erweiterter Schärfentiefe zum elektro-optischen Lesen von Zeichen

Appareil avec profondeur de champ étendu pour la lecture opto-éléctronique de marques

(84) Designated Contracting States:
**AT DE ES FR GB IT**

(30) Priority: **14.06.1991 US 717771**

(43) Date of publication of application:
**16.12.1992 Bulletin 1992/51**

(73) Proprietor: **SYMBOL TECHNOLOGIES, INC.**
**Holtsville, New York 11742-1300 (US)**

(72) Inventor: **Metlitsky, Boris**
**Stony Brook, NY 11790 (US)**

(74) Representative: **Wagner, Karl H., Dipl.-Ing. et al**
**WAGNER & GEYER**
**Patentanwälte**
**Gewürzmühlstrasse 5**
**80538 München (DE)**

(56) References cited:
| | |
|---|---|
| **EP-A- 0 396 485** | **EP-A- 0 449 490** |
| **US-A- 3 989 348** | **US-A- 4 560 862** |
| **US-A- 4 591 242** | **US-A- 4 748 316** |
| **US-A- 4 920 225** | **US-A- 4 978 860** |
| **US-A- 5 010 241** | **US-A- 5 021 641** |

## Description

The present invention relates generally to an optical reader and a method for reading with an extended depth of focus, and more particularly pertains to an optical reader and a method for reading bar codes which achieve an extended depth of focus by employing a multifocal length optical system. The subject invention is particularly useful in an optical reader employing a nonlaser radiation source such as a light emitting diode (LED) or a linear array of LEDs, but is also applicable to optical readers employing a laser source such as a laser diode. The subject invention is very useful in CCD based bar code readers.

In known scanning systems, a light beam is directed by a lens or similar optical components along a light path toward a target that includes a bar code symbol on the surface. The scanning functions by repetitively scanning the light beam in a line or series of lines across the symbol. The scanning component may either sweep the beam spot across the symbol and trace a scan line across and past the symbol, or scan the field of view of the scanner, or do both.

Laser scanners are not the only type of optical instrument capable of reading bar code symbols. Another type of bar code reader is one which incorporate detectors based upon charge coupled device (CCD) technology. In such readers the size of the detector is larger than or substantially the same as the symbol to be read. The entire symbol is flooded with light from the reader, and each CCD cell is sequentially read out to determine the presence of a bar or a space. Such readers are lightweight and easy to use, but require substantially direct contact or placement of the reader on the symbol to enable the symbol to properly read. Such physical contact of the reader with the symbol is a preferred mode of operation for some applications, or as a matter of personal preference by the user.

The depth of focus of bar code readers using Light Emitting Diodes (LEDs) is very limited as compared to laser based readers. The reason is that the f# of, for example, a CCD based reader with an LED source of illumination is much lower than the f# of a laser reader. As a consequence thereof, the depth of focus, which is proportional to f#$^2$, is very low for such CCD/LED based readers.

The prior art bar code readers may be classified into two classes or types of bar code readers, namely (i) bar code readers using a scanning beam swept across the bar code, and (ii) direct electro-optical bar code readers.

Bar code readers of the first type or class are e. g. shown in documents US-A-3 989 348, US-A-4 560 862, US-A-4 591 242, EP-A-0 396 485, US-A-4 920 225, US-A-4 748 316, and EP-A-0 449 490. This type of readers inherently uses moving elements, usually one or more mirrors, as the scanning component and includes complicated mechanics and optics. By using moving elements, the reader is prone to fatigue and failure.

Bar code readers of the second class are disclosed in documents US-A-4 978 860 and US-A-5 010 241 and also in Figure 1 of the present application. Documents US-A-4 978 860 and US-A-5 010 241 were used as a basis for drafting the preamble of claim 1.

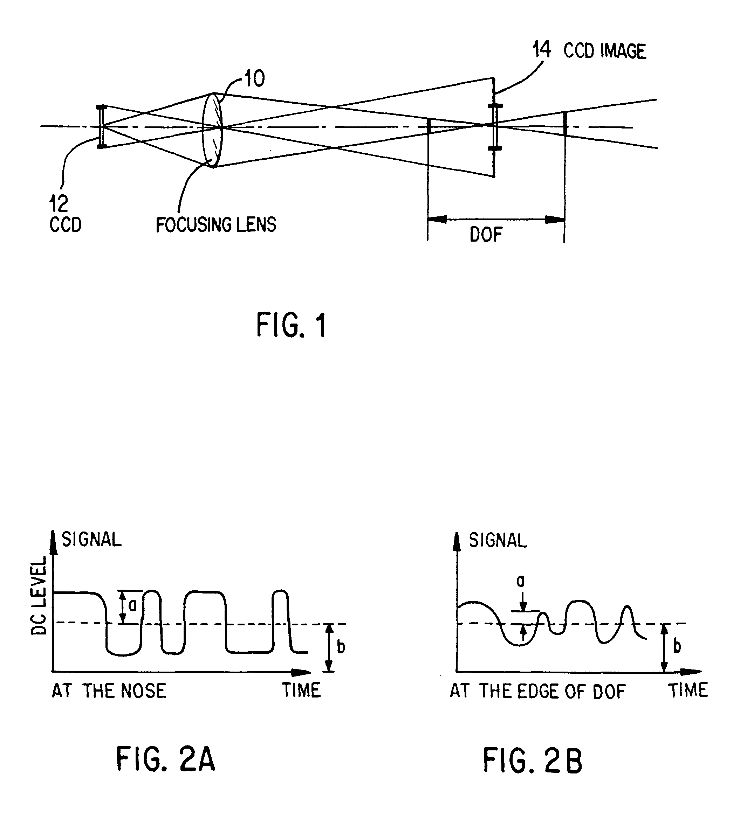

Figure 1 of the present application discloses an optical system for an LED/CCD bar code scanner. This LED/CCD bar code reader uses a single focal length lens system 10 for imaging a field of view at its focal length onto a CCD detector 12. The optical reader of Figure 1 has a given depth of field within which it defines a maximum beam diameter which enables it to read a bar code symbol of a given density. Usually, the CCD is focused right at the nose or front window of the reader using the optical system of Figure 1. As a consequence, half of the depth of focus is lost.

Vis-à-vis the prior art of Figure 1, the present invention intends to provide for an extended depth of focus such that bar codes having parts of different light reflectivity can be read within a greater range.

Figure 1 of US-A-5 010 241 shows schematically the configuration of an optical system for a bar code reader. The optical system of US-A-5 010 241 comprises an illumination section and an imaging section. The beam of the light source passes through a collimation lens and cylindrical lens to spread the illumination beam into a thin sheet. The spreading is done by a cylindrical lens.

When the sheet of light is directed at a bar code tag on an object, it illuminates a strip through the bar code tag on the object, at the intersection of the sheet of light and the object's surface. Light from the illuminated strip is reflected to the imaging section of the optical system. The imaging section comprises a detector array and an imaging lens which collects the light and forms an image on the detector array which is adapted to process said image.

Due to the Scheimpflug optics which are used (and are explained in some more detail in US-A-4 978 860), the sheet of light from the illumination section illuminates only a thin strip across the bar code tag. The modified Scheimpflug optical arrangement guarantees that this illuminated strip will form a focused image on the detector array. The detector array is located in a Scheimpflug plane with respect to the imaging lens and the plane of the illumination beam.

With this arrangement, the illuminated strip through the bar code on the object will be imaged on the detector array if the object is between certain points in the plane of the illumination beam. The distance between said points defines the working range of the bar code reader, and the effective depth of field of the optical system.

The object of the present invention is to provide a direct electro-optical bar code reader, i.e. a reader without moving scanning elements, the reader having a large depth of focus but which is less complicated than the prior art systems and can easily be installed and does not require any adjustment to a Scheimpflug plane.

This object is achieved by a reader as set forth in claim 1 and method of reading as set forth in claim 10. Preferred embodiments of the invention may be gathered from the dependent claims.

A radiation beam is generated for illuminating a field of view, either by a laser or nonlaser source. The embodiments specifically disclosed herein employ nonlaser sources such as LEDs which are cheaper than but have a more limited depth of focus than laser sources, but the principles of operation of the present invention are equally applicable to laser sources such as semiconductor laser diodes or laser tubes. In a CCD embodiment, for example, a multifocal length collection lens optical system, having at least a near range focal length and a long range focal length, collects radiation reflected from objects in the field of view, and directs it to an optical detector for detection and generation of an electrical output signal indicative thereof. The charge coupled detector has a plurality of charge coupled detection cells, and the field of view is scanned by scanning the electrical outputs of the plurality of charge coupled detection cells, rather than by using an oscillating scanning mirror element. The electrical output signal of the detector is then passed through a high pass filter which filters out a DC background electrical signal, thereby improving the depth of modulation (DOM) of the signal, and passes electrical output signals resulting from the detection of an indicia having parts of different light reflectivity.

The multifocal optical system includes a multifocal lens system, which may comprise a plurality of lenses such as a plurality of concentric lenses, each having a different focal point.

BRIEF DESCRIPTION OF THE DRAWINGS

The present invention may be more readily understood by one skilled in the art with reference being had to the following detailed description of several preferred embodiments thereof, taken in conjunction with the accompanying drawings wherein like elements are designated by identical reference numerals throughout the several views, and in which:

Figure 1 is a schematic illustration of a typical prior art optical system for an LED/CCD bar code reader;

Figs. 2A and 2B illustrate typical detector waveforms for the optical system of Figure 1 for a detected bar code pattern positioned, first at the focal point at the nose of the scanner, and secondly further out at the far edge of the depth of focus of the scanner;

Fig.3 depicts a first embodiment of a reader with an extended depth of focus pursuant to the teachings of the present invention in which the focusing optical system includes a first lens focused at a near focal length and a second lens focused at a far focal length;

Figs. 4A, 4B and 4C illustrate typical detector waveforms for the reader of Figure 3 for a detected bar code pattern positioned at the focal point of the first lens at the nose of the reader and also illustrates a summed detector waveform;

Figs. 5A, 5B, 5C and 5D depict the characteristic curve of a high pass filter and also show the summed detector output waveform before and after the signal has passed through a high pass filter;

Figs. 6A and 6B illustrates typical detector waveforms for the reader of Figure 3 for a detected bar code pattern positioned between the focal points of the first and second lenses at the edges of their respective depth of focus ranges;

Figs. 7A, 7B and 7C show the summed detector output waveform of Figs. 6A and 6B before and after the signal has passed through a high pass filter;

Figs. 8A and 8B illustrate typical detector waveforms for the reader of Figure 3 for a detected bar code pattern positioned at the far edge of the depth of focus range of the second lens;

Fig. 9A, 9B and 9C show the summed detector output waveform of Figs. 8A and 8B before and after the signal has passed through a high pass filter;

Figs. 10A and 10B illustrate a second embodiment of a reader with an extended depth of focus pursuant to the teachings of the present invention in which the focusing optical system includes a first lens focused at a near focal length, a second lens focused at a medium focal length, and a third lens focused at a very long focal length.

DETAILED DESCRIPTION OF THE DRAWINGS

Referring to the drawings in detail, Figure 1 is a schematic illustration of a typical prior art optical system for an LED/CCD bar code reader in which a single focal length lens system 10 images a field of view at its focal length onto a CCD detector 12, and conversely forms an image of the CCD detector at its focal length 14. The optical system of Figure 1 has a given depth of field (DOF) within which it defines a maximum beam diameter which enables it to read a bar code symbol of a given density (width of lines defining the bar code symbol). Moreover, as illustrated in Figure 1, usually the CCD is focused right at the nose or front of the reader, as a consequence of which half of the depth of focus is lost.

Figures 2A and 2B illustrates typical detector waveforms for the CCD reader of Figure 1 for a detected bar code pattern positioned first at the focal point at the nose or front window of the reader and secondly further out at the far edge of the depth of focus of the reader.

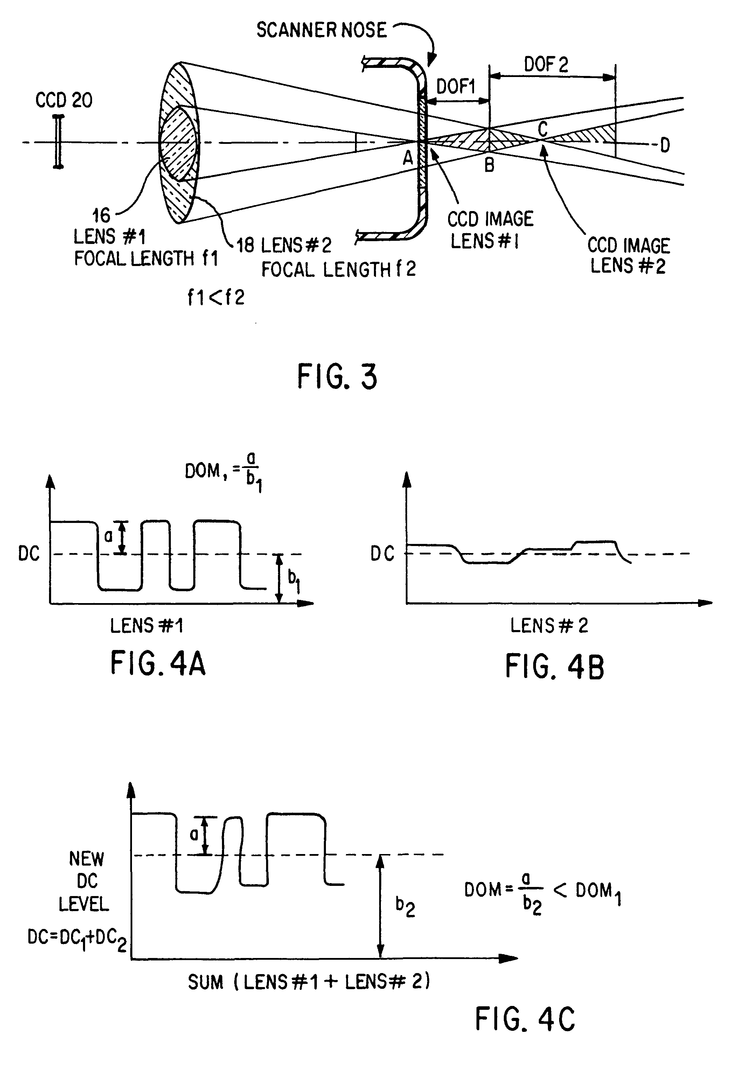

Figure 3 depicts a first embodiment of a reader with an extended depth of focus pursuant to the teachings of the present invention in which the focusing optical system includes a first lens 16 focused at a near focal length and a second lens 18 focused at a far focal length. The present invention uses a multifocal optical system preferably in combination with a high pass filter signal processing technique to increase the depth of focus or working range of the bar code reader. Both lenses form an image of the target (bar code) on the CCD detector simultaneously. Signal waveforms for different points A, B, C and D along the optical axis are as illustrated in Figures 4-9 and explained hereinbelow.

Figures 4A, 4B and 4C illustrate typical detector waveforms for the reader of Figure 3 for a detected bar code pattern positioned at point a at the focal point of the first lens at the nose or front window of the reader.

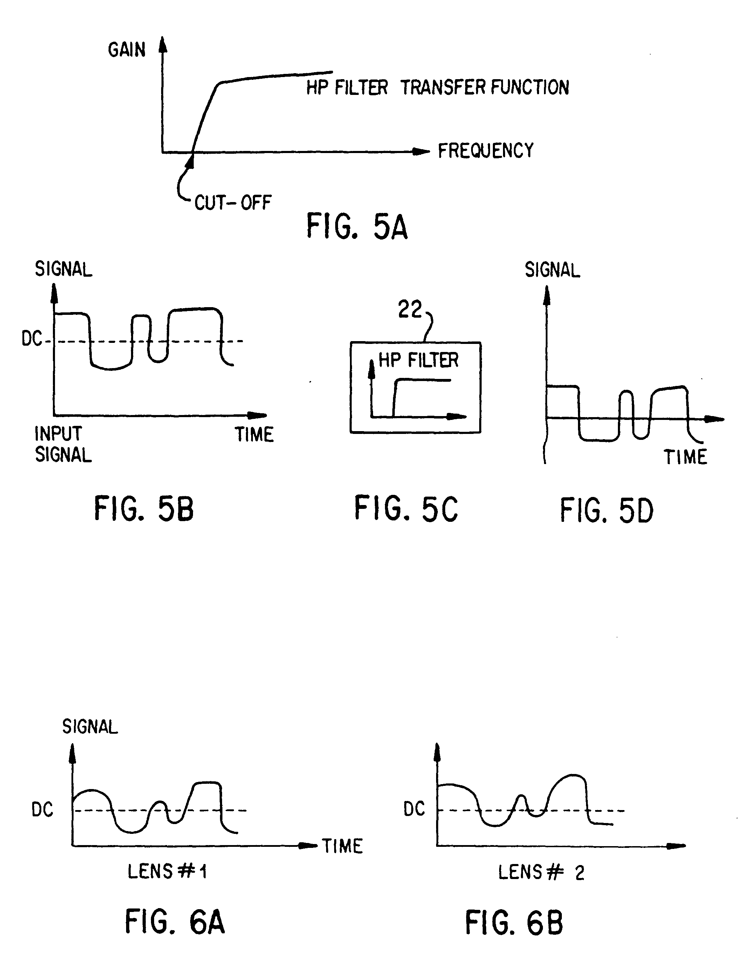

In general, the addition of the two signals shown in Figures 4A and 4B results in a smaller depth of modulation of the summed signal shown in Figure 4C which presents a substantial problem for the digitizer (ADC - analog to digital converter). To improve the depth of modulation, the signal is filtered through a high pass filter having a bandpass characteristic as shown in Figure 5A in order to eliminate the background DC level therefrom. Figures 5B, 5C and 5D depict the summed detector output waveform before and after the signal has passed through a high pass filter 22.

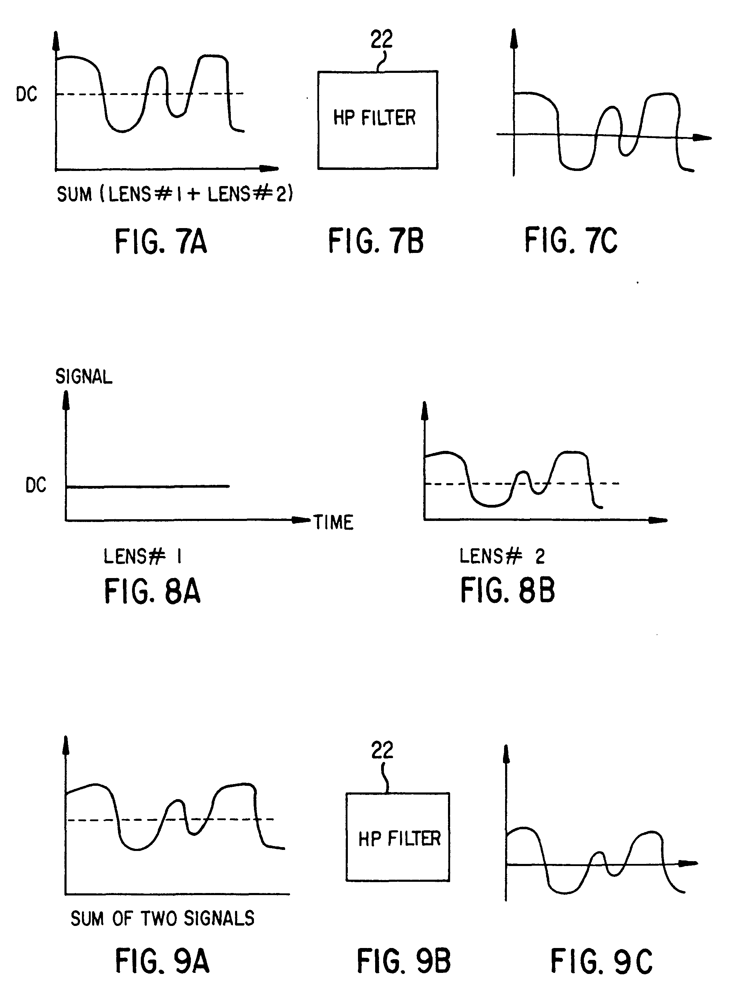

Figures 6A and 6B illustrate typical detector waveforms for the reader of Figure 3 for a detected bar code pattern positioned at point B between the focal points of the first and second lenses at the edges of their respective depth of focus ranges. Figures 7A, 7B and 7C shows the summed detector output waveform before and after the signal has passed through a high pass filter 22.

The situation at point C is very similar to the situation at point A.

Figures 8A and 8B illustrate typical detector waveforms for the scanner of Figure 3 for a detected bar code pattern positioned at point D wherein the first lens is completely out of focus, and at the far edge of the depth of focus range of the second lens. Figures 9A and 9C show the summed detector output waveform before and after the signal has passed through a high pass filter 22.

Passing the sum of the two signals through a high pass filter 22 produces a more workable signal (a signal with a greater depth of modulation). The high pass filter serves as a discriminator removing DC level signals from the signal.

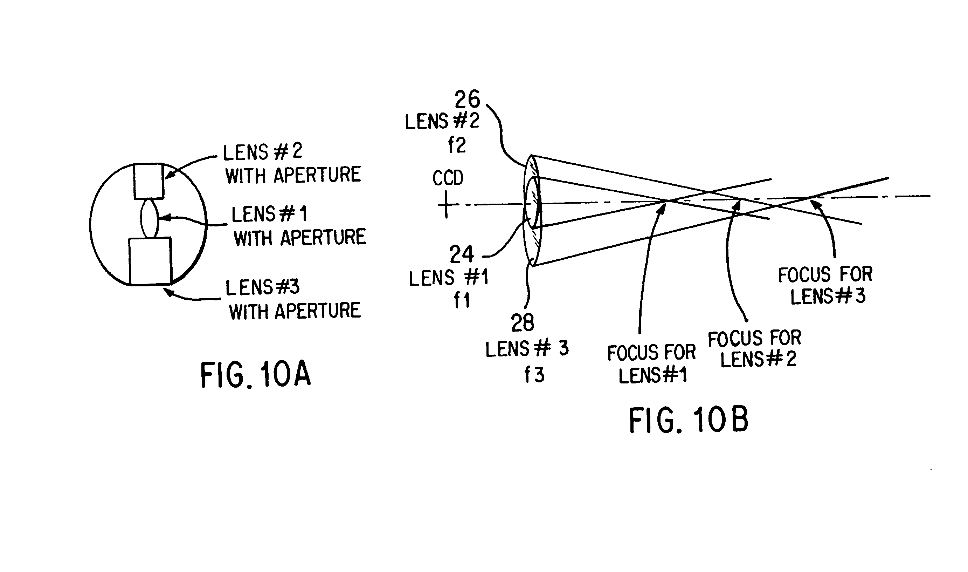

In alternative embodiments, three or more optical systems could be utilized simultaneously, and the depth of focus would be extended even further. Figures 10A and 10B illustrate a second embodiment of a reader with an extended depth of focus pursuant to the teachings of the present invention in which the focusing optical system includes a first lens 24 focused at a near focal length, a second lens 26 focused at a medium focal length, and a third lens 28 focused at a very long focal length.

The rectangular shapes of the apertures shown in Figure 10A in front of lenses is optional, and the aperture could take any suitable shape such as oval, circular, etc. However, the width of the aperture should be proportionately larger for the lens imaging the CCD further away, as shown by the apertures for the first, second and third lenses. This maintains the f# of the optical systems constant, or where there is a need to increase the signal collected from a larger distance, to decrease the f# of lenses imaging the CCD further away. It is important to remember that the collected signal is roughly $\sim \frac{1}{f\#^2}$.

The shape of the proposed lens is not simple, but is well within the state of the art of present plastic optics technology. The use of diffractive optics is possible also.

Although the present invention has been described with respect to reading one or two dimensional bar codes, it is not limited to such embodiments, but may also be applicable to more complex indicia scanning applications. It is conceivable that the present invention may also find application for use with various machine vision or optical character recognition applications in which information is derived from other types of indicia such as characters or from the surface characteristics of the article being scanned.

In all of the various embodiments, the elements of the reader may be assembled into a very compact package that allows the reader to be fabricated as a single printed circuit board or integral module. Such a module can interchangeably be used for a variety of different types of data acquisition systems. For example, the module may be alternately used in a hand-held reader, a table top reader attached to a flexible arm or mounting extending over the surface of the table of attached to the underside of the table top, or mounted as a subcomponent or subassembly of a more sophisticated data acquisition system.

An individual module may have specific decoding characteristics associated therewith, e.g., operability at a certain working distance, or operability with a specific symbology or printing density. The characteristics may also be defined through the manual setting of control switches associated with the module. The user may also adapt the data acquisition system to scan different types of articles or the system may be adapted for different applications by interchanging modules on the data acquisition system through the use of the simple electrical connector.

The module described above may also be implemented within a self-contained data acquisition system including one or more such components as keyboard, display, printer, data storage, application software, and data bases. Such a system may also include a communications interface to permit the data acquisition system to communicate with other components of a local area network or with the telephone exchange network, either through a modem or an ISDN interface, or by low power radio broadcast from the portable terminal to a stationary receiver.

## Claims

1. A reader for electro-optically reading indicia having parts of different light reflectivity, the reader dispensing with moving scanning elements and having an extended depth of focus, wherein the reader further comprises:

   a) means for illuminating a field of view;

   b) an optical lens system (16, 18), being placed in the collection path of said reader for collecting radiation reflected from objects in the field of view and for forming an image of indicia on said objects;

   c) an optical detector (20) for receiving said image and for generating an electrical output signal indicative thereof,

   **characterized in that**
   said optical lens system is a multifocal lens system having at least a first near range focal length and a second long range focal length.

2. A reader as claimed in claim 1, including a high pass filter (22) coupled to the electrical output signal of the optical detector (20) for filtering out a DC background electrical signal to improve the depth of modulation of the signal while passing electrical output signals resulting from the detection of an indicia having parts of different light reflectivity.

3. A reader as claimed in claim 1, wherein said multifocal length lens system (16, 18) includes a plurality of different lenses, each having a different focal point.

4. A reader as claimed in claim 3, wherein said plurality of different lenses include a plurality of concentric lenses.

5. A reader as claimed in claim 1, wherein said optical detector (20) includes a charge coupled detector having a plurality of charge coupled detection cells, and wherein the field of view is scanned by scanning the electrical outputs of the plurality of charge coupled detector cells.

6. A reader as claimed in claim 5, wherein said charge coupled detector includes an array of charge coupled diodes arranged in a common focal plane, with each diode being operative to emit an electrical current signal indicative of the intensity of the detected radiation.

7. A reader as claimed in claim 1, wherein said means for illuminating includes a light emitting diode.

8. A reader as claimed in claim 1, wherein said means for illuminating includes a linear array of light emitting diodes.

9. A reader as claimed in claim 1, wherein said means for illuminating includes a laser diode.

10. A method for electro-optically reading indicia having parts of different light reflectivity, the method dispensing with moving scanning elements and working with an extended depth of focus the method comprising :

    a. illuminating a field of view;

    b. collecting radiation reflected from objects in the field of view and forming an image of indicia on said objects with an optical lens system (16, 18) being placed in the collection path of said reader and

    c. receiving said image and generating an electrical output signal indicative thereof,
    **characterized by** applying a multifocal lens system having at least a first near range focal length and a second long range focal length.

11. A method as claimed in claim 10, including passing the electrical output signal through a high pass filter to filter out a DC background electrical signal to improve the depth of modulation of the signal.

## Patentansprüche

1. Ein Leser zum elektro-optischen Lesen von Zeichen mit Teilen mit unterschiedlichem Lichtreflexionsvermögen, wobei der Leser keine sich bewegenden Scanelementen aufweist und eine erweiterte Schärfentiefe besitzt, wobei der Leser weiterhin folgendes aufweist:

   a. Mittel zum Erleuchten eines Sichtfeldes;
   b. ein optisches Linsensystem (16, 18), das in dem Sammelpfad des Lesers angeordnet ist, zum Sammeln von Strahlung, die von Objekten in dem Sichtfeld reflektiert wird, und zum Bilden eines Abbildes von Zeichen auf den Objekten;

c. ein optischer Detektor (20) zum Empfangen des Abbilds und zum Erzeugen eines elektrischen Ausgangssignals, das anzeigend dafür ist,

d. **dadurch gekennzeichnet, daß**

das optische Linsensystem ein multifokales Linsensystem ist mit zumindest einer ersten Nahbereichsbrennweite und einer zweiten Fernbereichsbrennweite.

2. Leser nach Anspruch 1, der ein Hochpassfilter (22) umfaßt, das an ein elektrisches Ausgangssignal des optischen Detektors (20) gekoppelt ist, um ein elektrisches Gleichspannungshintergrundsignal auszufiltern, um die Modulationstiefe des Signals zu verbessern während elektrische Ausgangssignale durchgegeben werden, die aus der Detektierung von Zeichen resultieren, die Teile mit unterschiedlichem Lichtreflexionsvermögen besitzen.

3. Leser nach Anspruch 1, wobei das multifokale Linsensystem (16, 18) eine Vielzahl unterschiedlicher Linsen umfaßt, wobei jede einen unterschiedlichen Brennpunkt hat.

4. Leser nach Anspruch 3, wobei die Vielzahl unterschiedlicher Linsen eine Vielzahl konzentrischer Linsen umfaßt.

5. Leser nach Anspruch 1, wobei der optische Detektor (20) einen ladungsgekoppelten Detektor umfaßt mit einer Vielzahl von ladungsgekoppelten Detektierungszellen, und wobei das Sichtfeld gescannt wird, indem die elektrischen Ausgangswerte der Vielzahl von ladungsgekoppelten Detektorzellen gescannt werden.

6. Leser nach Anspruch 5, wobei der ladungsgekoppelte Detektor eine Anordnung ladungsgekoppelter Dioden umfaßt, die in einer gemeinsamen Brennebene angeordnet sind, wobei jede Diode funktioniert, um ein elektrisches Stromsignal zu emittieren, das anzeigend für die Intensität der detektierten Strahlung ist.

7. Leser nach Anspruch 1, wobei die Mittel zum Beleuchten eine lichtemittierende Diode umfassen.

8. Leser nach Anspruch 1, wobei die Mittel zum Beleuchten eine lineare Anordnung von lichtemittierenden Dioden umfaßt.

9. Leser nach Anspruch 1, wobei die Mittel zum Beleuchten eine Laserdiode umfassen.

10. Ein Verfahren zum elektro-optischen Lesen von Zeichen mit Teilen mit unterschiedlichen Lichtreflexionsvermögen, wobei das Verfahren keine sich bewegenden Scanelemente aufweist und mit einer erweiterten Tiefenschärfentiefe arbeitet, wobei das Verfahren folgendes aufweist:

a. Beleuchten eines Sichtfeldes;

b. Sammeln von Strahlung, die von Objekten in dem Sichtfeld reflektiert wird und Bilden eines Abbildes von Zeichen auf den Objekten, wobei ein optisches Linsensystem (16, 18) in dem Sammelpfad des Leser angeordnet ist und

c. Empfangen des Abbildes und Erzeugen eines elektrischen Ausgangssignals, das anzeigend dafür ist, **gekennzeichnet durch** Verwenden eines multifokalen Linsensystems mit zumindest einer ersten Nahbereichsbrennweite und einer zweiten Fernbereichsbrennweite.

11. Verfahren nach Anspruch 10, das das Durchgeben des elektrischen Ausgangssignals durch ein Hochpassfilter umfaßt, um ein elektrisches Gleichspannungshintergrundsignal auszufiltern, um die Modulationstiefe des Signals zu verbessern.

## Revendications

1. Lecteur destiné à lire de façon électro-optique des inscriptions comportant des parties ayant une réflectivité différente de la lumière, le lecteur, n'utilisant pas d'éléments mobiles de balayage, et ayant une profondeur de foyer étendue, dans lequel le lecteur comprend en outre :

a) un moyen destiné à éclairer un champ de vision ;

b) un système optique (16, 18) de lentilles qui est placé dans le trajet de collecte dudit lecteur pour collecter un rayonnement réfléchi par des objets dans le champ de vision et pour former une image d'inscriptions se trouvant sur lesdits objets ;

c) un détecteur optique (20) destiné à recevoir ladite image et à engendrer un signal électrique de sortie qui la représente,

**caractérisé**

**en ce que** ledit système optique de lentilles est un système multifocal de lentilles ayant au moins une première longueur focale à faible portée et une seconde longueur focale à longue portée.

2. Lecteur selon la revendication 1, incluant un filtre passe-haut (22) associé au signal électrique de sortie du détecteur optique (20) pour éliminer par filtrage un signal électrique de courant continu, d'arrière-plan, pour améliorer la profondeur de modulation du signal tout en laissant passer des signaux électriques de sortie résultant de la détection d'une inscription ayant des parties présentant une réflectivité différente de la lumière.

3. Lecteur selon la revendication 1, dans lequel ledit système multifocal (16, 18) de lentilles comprend une pluralité de lentilles différentes, chacune ayant un point focal différent.

4. Lecteur selon la revendication 3, dans lequel ladite pluralité de lentilles différentes comprend une pluralité de lentilles concentriques.

5. Lecteur selon la revendication 1, dans lequel ledit détecteur optique (20) comprend un détecteur à couplage de charge ayant une pluralité de cellules de détection à couplage de charges, et dans lequel le champ de vision est balayé par examen des sorties électriques de la pluralité de cellules du détecteur à couplage de charges.

6. Lecteur selon la revendication 5, dans lequel ledit détecteur à couplage de charge comprend un groupement de diodes à couplage de charge disposé dans un plan focal commun, chaque diode étant utilisable pour émettre un signal de courant électrique représentatif de l'intensité du rayonnement détecté.

7. Lecteur selon la revendication 1, dans lequel ledit moyen destiné à éclairer comprend une diode émettrice de lumière.

8. Lecteur selon la revendication 1, dans lequel ledit moyen destiné à éclairer comprend un groupement rectiligne de diodes émettrices de lumière.

9. Lecteur selon la revendication 1, dans lequel ledit moyen destiné à éclairer comprend une diode à laser.

10. Procédé destiné à lire de façon électro-optique des inscriptions ayant des parties présentant une réflectivité différente de la lumière, le procédé n'utilisant pas d'éléments mobiles de balayage et travaillant avec une profondeur de foyer étendue, le procédé comprenant :

    a. l'éclairage d'un champ de vision ;
    b. la collecte de rayonnement réfléchi par des objets situés dans le champ de vision, et la formation d'une image d'inscriptions se trouvant sur lesdits objets, à l'aide d'un système optique de lentilles (16, 18) qui est placé dans le trajet de collecte dudit lecteur ; et
    c. la réception de ladite image et la production d'un signal électrique de sortie qui la représente,

    **caractérisé par** l'utilisation d'un système multifocal de lentilles comportant au moins une première longueur focale à courte portée et une seconde longueur focale à longue portée.

11. Procédé selon la revendication 10, incluant le passage du signal électrique de sortie dans un filtre passe-haut pour éliminer par filtrage un signal électrique de courant continu, d'arrière-plan, pour améliorer la profondeur de modulation du signal.

FIG. 1

FIG. 2A

FIG. 2B

SCANNER NOSE

CCD 20

DOF 2

DOF1

CCD IMAGE LENS #1

CCD IMAGE LENS #2

16
LENS #1
FOCAL LENGTH f1

18 LENS #2
FOCAL LENGTH f2

f1 < f2

A    B    C    D

FIG. 3

$DOM_1 = \dfrac{a}{b_1}$

DC

a

$b_1$

LENS #1

FIG. 4A

DC

LENS # 2

FIG. 4B

NEW
DC
LEVEL

a

$b_2$

$DOM = \dfrac{a}{b_2} < DOM_1$

$DC = DC_1 + DC_2$

SUM ( LENS #1 + LENS# 2)

FIG. 4C

GAIN

HP FILTER TRANSFER FUNCTION

FREQUENCY

CUT-OFF

## FIG. 5A

SIGNAL

DC

INPUT
SIGNAL

TIME

## FIG. 5B

22

HP FILTER

## FIG. 5C

SIGNAL

TIME

## FIG. 5D

SIGNAL

DC

LENS #1

TIME

## FIG. 6A

SIGNAL

DC

LENS # 2

## FIG. 6B

DC

SUM (LENS #1 + LENS #2)

**FIG. 7A**

22

HP FILTER

**FIG. 7B**

**FIG. 7C**

SIGNAL

DC

TIME

LENS# 1

**FIG. 8A**

LENS# 2

**FIG. 8B**

SUM OF TWO SIGNALS

**FIG. 9A**

22

HP FILTER

**FIG. 9B**

**FIG. 9C**

FIG. 10A

LENS #2
WITH APERTURE

LENS #1
WITH APERTURE

LENS #3
WITH APERTURE

26
LENS #2
f2

CCD

24
LENS #1
f1

28
LENS #3
f3

FOCUS FOR LENS#1

FOCUS FOR LENS#2

FOCUS FOR LENS#3

FIG. 10B

EP 0 517 956 B1